# EUROPÄISCHE PATENTANMELDUNG

(11) **EP 2 187 342 A1**
(43) Veröffentlichungstag der Anmeldung: **19.05.2010**
(21) Anmeldenummer: 08019796.5
(22) Anmeldetag: 13.11.2008
(51) Int. Cl.: G06K 19/02, G06K 19/077

(54) **Transponder zur Kennzeichnung von Wäscheteilen**

(71) Anmelder: Thermo Tex Nagel GmbH, 77746 Schutterwald (DE)
(72) Erfinder: Blümle, Sascha, Dipl.-Ing., 77855 Achern-Fautenbach (DE); Nagel, Dietmar, 77799 Offenburg (DE)
(74) Vertreter: Kirchgaesser, Johannes

(57) **Zusammenfassung**

Die Erfindung betrifft einen zur Kennzeichnung von Wäscheteilen geeigneten Transponder, welcher aus einer auf einer Trägerfolie (4) aufgebrachten Antenneristruktur (5) und einem mit der Antennenstruktur (5) elektrisch verbundenen Halbleiterchip (6) besteht, wobei diese als Inlay (3) bezeichnete Einheit von zwei Folien (7) aus hochflexiblem Werkstoff umhüllt wird.

Um den flachen und flexiblen Transponder unabhängig von dem zu erwartenden Waschprozess im industriellen Wäschereiumfeld generell einsetzen zu können, ist erfindungsgemäß vorgesehen, dass die Folien (7) aus Polytelrafluorethen mit einer Dicke von 0,08 - 0,25 mm bestehen und einseitig mit einem temperaturbeständigen Selbstkleber auf Silikonbasis beschichtet sind, wobei die äußere Form der Folie (7) rund ist.

## Beschreibung

Die Erfindung bezieht sich auf einen zur Kenzeichnung von Wäscheteilen geeigneten Transponder, bestehend aus einer auf einer Trägerfolie aufgebrachte Antennenstruktur und einem mit der Antennensbuktur elektrisch verbundenen Halbleiterchip, wobei das aus Trägerfolie, Antennenstruktur und Chip bestehende. so genannte Inlay von zwei Folien aus hochflexiblem Werkstoff umhüllt wird.

Es existiert eine Reihe von Lösungen hinsichtlich der Integration von so genannten RFID-Transpondern in Textilien, welche jedoch im Detail nicht unmittelbar geeignet für den Einsatz in industriellen Wäschereien sind, insbesondere im Hinblick auf mangelbare Flachwäsche. Im Bereich Kennzeichnung von industriell waschbarer Bekleidung mit RFID - Transponder Technologie werden üblicherweise so genannte Handtags eingesetzt. Dabei handelt es sich um in schlagzähen Kunststoff fest vergossene Antennen- /Chipgebilde, welche durch das meist runde, pillenförmige Kunststoffgehäuse weitestgehend vor den durch hohe Temperaturen, Feuchtigkeit und mechanischer Beaufschlagung bedingten äußeren Einflüssen geschützt werden können. Die Art der Verpackung lässt jedoch nur einen eingeschränkten Einsatzbereich im industriellen Wäschereiumfeld zu.

Um die Logistikkette vollstandig abbilden zu können, sind aber Transponder notwendig, die auch Vorgänge wie das Pressen in Entwässerungsmaschinen und das Mangeln in Heißmangelmaschinen überstehen. Zusätzlich besteht die Forderung, die Haltbarkeit der Textilien, in welche die Transponder eingebracht werden, nicht zu beeinflussen.

Es gibt diverse Ansätze die oben beschriebene harte Struktur in eine flache, flexible Form zu überführen. In diesem Zusammenhang werden bisher Laminate aus polymeren Kunststoffen eingesetzt, welche zum Schutz der dann innen liegenden Antennen- / Chipstrukturen steif und weitestgehend unflexibel gestaltet sind. Eine dauerhafte Haltbarkeit (> 100 Waschzyklen inklusive mangeln und pressen) dieser Bauformen konnte durch zahlreiche eigene Waschtests und durch Feldtests nicht bestätigt werden. Durch die relativ starre Außenhaut sind die innen liegenden Strukturen bei einem starken Knick sehr verletzlich und überdauern die mechanischen Einflüsse der industriellen Waschprozesse nicht dauerhaft.

Klassische Hardtags können im Bereich Mangeln / Pressen aufgrund der akuten Bruchgefahr des harten Transponder Gehäuses in diesen Prozessen ebenfalls nur sehr eingeschränkt eingesetzt werden. Ein gewisser Tragekomfort, speziell im Bereich Oberbekleidung, muss ebenfalls trotz Kennzeichnung der Textilien mit Transponder gewährleistet bleiben. Die beschriebenen starren Gehäuseformen können diesem Anspruch nicht gerecht werden.

In DE 102004027978 A1 wird eine Anordnung beschrieben, welche für die Kennzeichnung von Textilien mittels Radio Frequency Identification (RFID) - Technologie für Reinigungsvorgänge geeignet ist. Dort ist ein RFID - Etikett beschrieben, in welchem ein Antennen- und Modulbereich zwischen dünnen, mit Kleber beschichteten Deckfolien aus flexiblem und reißfestem Kunststoff heiß einlaminiert wird. Als Werkstoff für die Deckfolien wird Polyester (PE) bzw. Polyethylennaphthalat (PEN) angegeben. Um diese Werkstoffe wirksam zu verkleben, müssen die Klebeflächen vor dem Verkleben mit einem speziellen Verfahren vorbehandelt werden. Ebenfalls verwendet die Anordnung zur Erstellung der Antennenstruktur flexible Drähte aus speziellen Werkstoffen, welche mittels Schweiß- oder Lötverfahren mit den Konhaldierungsflächen des Chips verbunden werden.

Bei der Lösung der vorliegenden Aufigabenstellung erscheinen stabile, auf Folien aufgebaute Transponder (so genannte Inlays) als Basis trotzdem aussichtsreich. Folienschaltungen können auf sehr kostengünstigen Folien aufgebaut wenden. Diese Low-cost-Polymere wie Polyester zeigen jedoch bei Überschreitung der niedrigen Glasübergangstemperatur starke unerwünschte Nebenwirkungen wie Längen Veränderungen, Form Änderung oder eine signifikant verringerte Festigkeit.

Ein weiteres schwerwiegendes Problem ist die Metallisierungsstruktur für die Flachspule der Antenne. Der Schaltungsträger ist zur Bildung dieser Antenne mit einer Metallisierung versehen, die beispielsweise aus strukturierten Kupfer- oder Aluminium-Folien aufgeklebt wird. Diese Klebeverbindung stellt in der Regel bei thermischer Belastung einen Schwachpunkt dar. Zur Ankontaktierung wird aus Kostengründen meist die Polymer Frtp-Chip-Technik verwendet. Diese ist mit anisotropen Haftklebern und mit isotropen Leitklebern realisierbar.

Aufgabe der Erfindung ist die Entwicklung eines im industrieller Wäschereiumfeld einsetzbaren, flachen und flexiblen RFID - Transponders zur Kennzeichnung von beliebigen Wäscheteilen, unabhängig von dem zu erwartenden Waschprozess. Hierbei müssen die Transponder folgenden physikalischen Einflüssen dauerhaft standhalten:
- Temperaturen von bis zu 200°C für kurze Zeit (< 20 s)
- Feuchtigkeit bis zu 100 % (auch rel. Feuchte)
- Druck bis zu 10 N/cm³ dynamisch
- Druck bis zu 50 N/cm³ statisch
- Scher und Zugkräfte

Diese Forderungen können nur erfüllt werden, wenn für das beschriebene Inlay geeignete Werkstoffe und Designs eingesetzt werden und die Inlays zusätzlich gegen die oben beschriebenen äußeren Einflüsse geschützt werden.

Der zur Lösung dieser Aufgabe vorgeschlagene Transponder ist speziell für die zu erwartenden physikalischen Belastungen ausgelegt. Er besteht aus einem flexiblen Inlay, welches aus einer wärmebeständigen Trägerfolie, einer auf die Trägerfolie aufgebrachten Antennenstruktur und einem Halbleiterchip aufgebaut ist Das Inlay ist hierbei von einer wärmebeständigen, wasserdichten und schützenden Außenhülle (Folie) aus einem hoch flexiblen Werkstoff umgeben. Die Folien bestehen hierbei erfindungsgemäß aus Polytetrafluorethen mit einer Dicke von 0,08 - 0,25 mm und sind einseitig mit einem temperaturbeständigen Selbstkleber auf Silikonbasis beschichtet. Außerdem sollte die äußere Form der Folie rund sein.

In Textilien kann diese Anordnung jeweils über ein Heißsiegelverfahren eingebracht werden, indem der Transponder mit einem textilen, mit Schmelzkleber beschichteten Etikett in das Textil heiß eingesiegelt wird. Alternativ ist auch das Einnähen in eine eventuell vorhandene Stofffalte denkbar.

Um die beschriebene Einsetzbarkeit und eine dauerhafte Haltbarkeit des Transponders zu erreichten, sind insbesondere die nachfolgenden Materialien und Designs qualifiziert:

Die Trägerfolie des Inlays besteht aus wärmebesländigem Polyimid mit einer minimalen Dicke von 10 µm. Auf diese Trägerfolie wird mit einem kleberlosen Verfahren doppelseitig je Seite mindestens 8 µm Basiskupfer ausgebracht Der Vorteil dieser Materialkombination besteht darin, dass die Trägerfolie und das verwendete Basiskupfer eine mechanisch sehr belastbare Verbindung eingehen. Zudem ist die Polyimid Folie sehr flexibel und das Basiskupfer ausgesprochen dehnbar.

Weiterhin kann durch das kleberlose Verfahren die Verbindungsstelle nicht wie bei Laminaten, die auf Basis eines Haftklebers miteinander verbunden sind, korrodieren. Tests haben ergeben, dass sich beide Materialien bei starken Belastungen wie Knicken oder Zug selbst unter hoher thermischer Beaufschlagung nicht voneinander lösen.

In der Zeichnung ist ein bevorzugtes Ausführungsbeispiel der Erfindung dargestellt, weiches - zusammen mit den aus den Unteransprüchen hervorgehenden weiterführenden Merkmalen der Erfindung - nachfolgend näher erläutert werden soll.

Es zeigen:

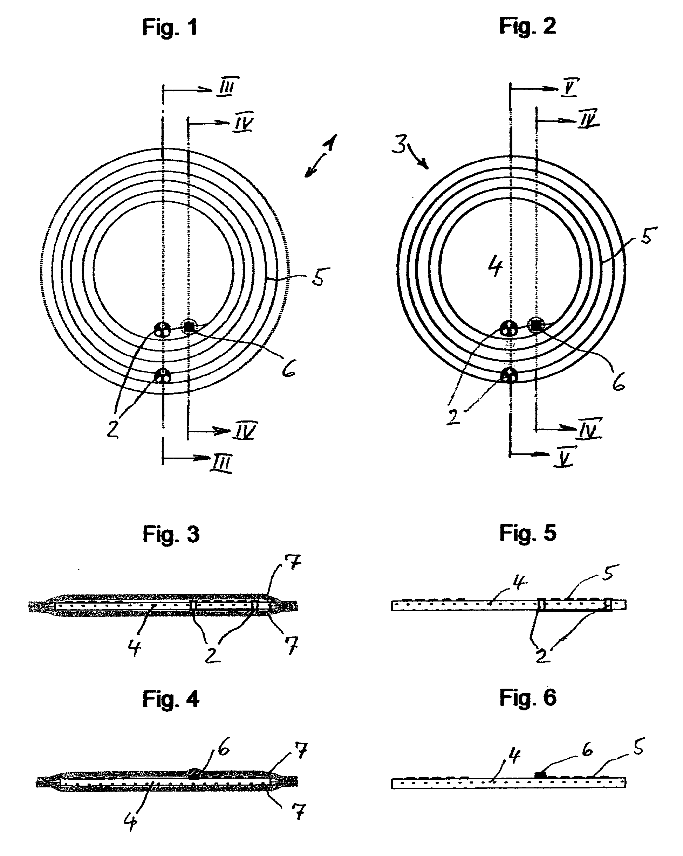

- Fig. 1: Einen RFID Transponder in Draufsicht,
- Fig. 2: das zugehörige Inlay in Draufsicht,
- Fig. 3: einen Schnitt durch Fig. 1 gemäß Linie III - III,
- Fig. 4: einen Schnitt durch Fig. 1 gemäß Linie IV - IV,
- Fig. 5: einen Schnitt durch Fig. 2 gemäß Linie V - V und
- Fig. 6: einen Schnitt durch Fig. 2 gemäß Linie VI - VI

Der in den Figuren gezeigte Transponder 1 dient zur Kennzeichnung von Wäscheteilen. Er besteht aus einer auf einer Trägerfolie 4 aufgebrachten Antennenstruktur 5 und einem mit der Antennenstruktur 5 elektrisch verbundenen Halbleiterchip 6, wobei diese als Inlay 3 bezeichnete Einheit von zwei Folien 7 aus hochflexiblem Werkstoff umhüllt wird. Die Folien 7 bestehen hierbei vorteilhafter Weise aus Polytetrafluorethen. weisen eine Dicke von 0,08 - 025 mm auf und sind einseitig mit einem selbstklebenden, temperahubeständigen Haftkleber auf Silikonbasis beschichtet.

Die hierfür speziell entwickelte Antennenstruktur 5 erfüllt die Notwendigkeit, ein geschlossenes Antennendesign zu verwenden. Beide Seiten sind durch Kontaktierungsstellen 2 mehrfach miteinander verbunden. Zudem ist bei der Antennenstruktur 5 berücksichtigt, dass der Chip 6 außerhalb der Hauptknicklinie des Transponders 1 liegt Bevorzugt wird aus diesem Grund für die Form des Inlays 3 eine Kreisform gewählt, um bei Knicken des Transponders keine Vorzugsrichtung vorzugeben.

Der Chip 6 ist vorzugsweise so gestaltet, dass die geometrische Maße für eine Seitelänge 0,8 mm betragen. Damit kann weitestgehend ausgeschlossen werden, dass der Chip 6 durch äußere mechanische Belastungen zerstört wird. Für die Verbindung des Chips 6 mit der Trägerfolie 4 wird wahlweise ein Flipchipbonding im ACA - Prozess oder auf Isocyanat - Basis verwendet. Als zusätzlichen Schutz des Bondings wird eine überdeckung des Chips 6 mit Epoxyharz oder wahlweise mit Zweikomponenten - Silikon angestrebt.

Die Umhüllungsfolie 7 besteht aus Polytetrafluorethen (PTFE) und besitzt eine Dicke von mindestens 0,08 und maximal 0,25 mm. Diese Folie 7 ist mit einem selbstklebenden, temperaturbeständigen Silikonkleber beschichtet Durch einfaches Einlegen des Inlays 3 zwischen zwei Schichten dieser selbstklebenden Folie 7 kann das Inlay 3 sehr einfach wasserdicht verpackt werden.

Die PTFE - Folie 7 bietet dem Inlay 3 zudem ausreichend Schutz vor zu kleinen Biegeradien bei Belastung des Transponders und vor starkem Wärmeeinfluss im Waschprozess. Durch eine zusätzliche Behandlung der Außenseite der PTFE - Folie 7 mit bekannten Plasma- oder Säureverfahren kann diese außerdem für ein Thermotransfer - Druckverfahren bedruckbar gemacht werden.

### Bezugszeichen:

- 1: Transponder
- 2: Kontaktierungsstellen
- 3: Inlay
- 4: Trägerfolie
- 5: Antennenstruktur
- 6: Halbleiterchip
- 7: Umhüllungsfolie

## Patentansprüche

1. Zur Kennzeichnung von Wäscheteilen geeigneter Transponder, bestehend aus einer auf einer Trägerfolie (4) aufgebrachten Antennenstruktur (5) und einem mit der Antennenstruktur (5) elektrisch verbundenen Halbleiterchip (6), wobei diese als Inlay (3) bezeichnete Einheit von zwei Folien (7) aus hochflexiblem Werkstoff umhüllt wird, **dadurch gekennzeichnet, dass** diese Folien (7) aus Potytetrafluorethen mit einer Dicke von 0,08 - 0,25 mm bestehen und einseitig mit einem temperaturbeständigen Selbstkleber auf Silikonbasis beschichtet sind, wobei die äußere Form der Folie (7) rund ist

2. Transponder nach Anspruch 1, **dadurch gekennzeichnet, dass** die für das Inlay (3) verwendete Folie (4) aus Polyimid mit einer Dicke von 10 - 70 µm besteht

3. Transponder nach Anspruch 1 oder 2, **dadurch gekennzeichnet, dass** die für das Inlay (3) verwendete Folie (4) einseitig mit Basiskupfer mit einer Dicke von 8 - 50 µm beschichtet ist

4. Transponder nach Anspruch 1 oder 2, **dadurch gekennzeichnet, dass** die Folie (4) zweiseitig mit Basiskupfer in einer Dicke von 8 - 50 µm beschichtet ist.

5. Transponder nach Anspruch 4, **dadurch gekennzeichnet, dass** die Antennenstruktur (6) mittels Mehrfachdurchkontaktierungen (2) elektrisch verbunden ist.

6. Transponder nach Anspruch 1 **dadurch gekennzeichnet, dass** der Halbleiterchip (6) mit Epoxyharz überdeckt ist.

7. Transponder nach Anspruch 1 **dadurch gekennzeichnet, dass** der Halbleiterchip (6) mit Zweikomponenten-Silikon überdeckt ist.

8. Transponder nach Anspruch 1 **dadurch gekennzeichnet, dass** der Halbleiterchip (6) außerhalb der geometrischen Knicklinien des Inlays (3) auf der Folie (4) befestigt ist.
